# EUROPÄISCHE PATENTSCHRIFT

(11) **EP 0 254 940 B1**
(45) Veröffentlichungstag und Bekanntmachung des Hinweises auf die Patenterteilung: **09.06.1993**
(21) Anmeldenummer: 87110042.6
(22) Anmeldetag: 11.07.1987
(51) Int. Cl.: B24D 18/00, C04B 41/91

(54) **Verfahren zum Bearbeiten von Diamantkörnern**
Method for processing diamond particles
Procédé de traitement de particules de diamant

(30) Priorität: 30.07.1986 DE 3625743
(43) Veröffentlichungstag der Anmeldung: 03.02.1988
(73) Patentinhaber: Ernst Winter & Sohn (GmbH & Co.), D-20243 Hamburg (DE)
(72) Erfinder: Borse, Dietrich, D-2000 Hamburg 61 (DE)
(74) Vertreter: Minetti, Ralf, Dipl.-Ing.

(56) Entgegenhaltungen:
- DE-A- 1 521 091
- FR-A- 2 461 031
- US-A- 4 038 117
- US-A- 4 062 660
- IBM TECHNICAL DISCLOSURE BULLETIN, Band 18, Nr. 12, Mai 1976, Seiten 4185-4186, New York, US; R.F. RUTZ: "Selective etching of sapphire"

## Beschreibung

Die Erfindung betrifft ein Verfahren zum Bearbeiten von Diamantkörnern.

Bei der Verwendung von Diamantkörnern beispielsweise zur Herstellung von Diamantwerkzeugen wie Schleifscheiben, Abrichtwerkzeugen für Schleifscheiben oder von anderen diamanthaltigen Gebrauchsgegenständen, wie Schmuckwaren oder mit einem Diamanten versehene Nadel zum Abtasten, ist es allgemein von besonderer Bedeutung, daß die Diamantkörner im umgebenden Bindungsmaterial einen ausreichend festen Halt haben.

Bei Diamantwerkzeugen werden als Bindungsmaterialien Metalle, Metallegierungen, Glas, Keramik oder Kunstharz verwendet. Die meisten dieser Bindungsmaterialien haben keine haftende Verbindung mit der Oberfläche der Diamantkörner, oder die Haftkräfte sind relativ niedrig. Somit werden die Diamantkörner von dem Bindungsmaterial meist nur umhüllt. Das gilt vor allem für metallische Bindungen. Ausnahmen sind solche Metallegierungen, die mindestens eine Komponente enthalten, die dazu neigt, mit der Diamantoberfläche chemisch zu reagieren oder in die Diamantoberfläche einzudiffundieren. Bei solch reaktiven metallischen Bindungsmaterialien wird die Diamantoberfläche mehr oder weniger stark angegriffen, wobei ein Teil des Diamantkohlenstoffs durch das Metall abgetragen wird. Die daraus resultierende, an der Diamantoberfläche erzeugte Rauhigkeit kann zwar dazu beitragen, die Verankerung des Diamantkorns in der Bindung zu verbessern. Das Einbinden der Diamantkörner in die metallische Bindung, bei der es zu solch einer Reaktion kommt, findet bei höherer Temperatur statt, die über 900°C liegt. Bei der anschließenden Abkühlung, nach der Herstellung der Diamantbindung, kommt es aber fast stets wieder zu einer Ausscheidung des vom Metall gelösten oder aufgenommenen Kohlenstoffs an der Grenzfläche zwischen Diamant und metallischer Bindung, und dieser ausgeschiedene Kohlenstoff hat keine wesentliche Festigkeit. Es kann sich dabei um eine Graphitschicht handeln oder um eine Schicht aus amorphem Kohlenstoff oder sprödem Carbid. Auf diese Weise wird daher an der Grenzfäche zwischen Diamantkorn und Bindung keine wirksame Verbesserung der Haftverbindung erreicht. Die ausgeschiedene Kohlenstoffschicht kann sogar eine Schwächung der Verbindung zwischen Bindemetall und Diamantkörnung bedeuten.

Bekannt ist, daß Diamantkörner angegriffen und aufgerauht werden, wenn sie im Sinterverfahren von einer Metallpulvermatrix umgeben werden, und die Metallpulver aus Eisen oder Cobalt oder aus Legierungen mit diesen Metallen bestehen. Eine Anätzung von Diamantoberflächen läßt sich feststellen, wenn die Sinterlegierungen im Bereich zwischen 950°C und 1150°C verarbeitet werden.

Ein anderes bekanntes Verfahren besteht darin, daß man Diamantkörner in einem Ofen freiliegend erhitzt, wobei die Ofenatmosphäre aus Sauerstoff besteht oder aus einem sauerstoffhaltigen Gas, wie z.B. Luft. Dabei werden die Diamantkörner schon ab etwa 600°C angegriffen. Es handelt sich somit um eine verlangsamte Verbrennung des Diamantkohlenstoffs zu Kohlenmonoxid CO, bei der von der Diamantoberfläche Diamantmaterial abgetragen wird, wobei auch kleine Ätzgruben entstehen.

Eine ähnliche Anätzung an Diamantoberflächen läßt sich erzielen beispielsweise wenn Diamantkörner in einer Schmelze aus Kaliumnitrat KNO₃ bei einer Temperatur ab 500°C behandelt werden.

Alle vorgenannten Ätzverfahren bzw. Verfahren zum Aufrauhen ergeben keine voll befriedigenden Resultate. Zum einen beruht das auf den Reaktionstemperaturen von über 900°C, bei denen nicht nur die Oberfläche der Diamanten angegriffen wird, sondern auch die innere Festigkeit der Kristalle verringert wird. Das gilt in besonderem Maße für synthetische Diamantkörner, die im Normalfall noch Spuren des zu ihrer Herstellung verwendeten Katalysatormetalls enthalten. Diese Katalysatorreste führen bei Temperaturen oberhalb von 900°C zu einer Regraphitierung der Diamanten oder auch zu einer teilweisen Sprengung des Kristalls durch die relativ große thermische Ausdehnung, die diese Metallreste im Vergleich zum Diamantmaterial haben.

Zum anderen liegt ein wesentlicher Nachteil der bekannten Verfahren darin, daß von den Diamantkristallen relativ viel Material abgetragen werden muß, bis die Oberfläche eine zufriedenstellende Rauhigkeit aufweist, denn es handelt sich bei diesen Aufrauhungs- oder Ätzverfahren um flächenabtragende Verfahren, die nicht flächenparallel fortschreiten. Dieser unerwünschte, relativ große Materialabtrag von Diamantkristallen zeigt sich darin, daß zum Aufrauhen einer Diamantkörnung von ca. 500 µm Körnungsgröße ein Gewichtsverlust von 10% in Kauf genommen werden muß,und das bedeutet bereits einen beträchtlichen Wertverlust. Bei verschiedenen bekannten Aufrauhverfahren entstehen sogar Gewichtsverluste von etwa 30 %.

Aufgabe der Erfindung ist es, ein Aufrauhverfahren zu schaffen, das bei einer Temperatur unterhalb von 900°C durchgeführt werden kann und zu einem Gewichtsverlust an Diamant von nicht mehr als maximal 5 % führt und eine Oberflächentopographie schafft, welche durch zahlreiche sehr kleine Löcher geprägt ist, deren Tiefe größenteils größer ist als ihr Durchmesser. Die Oberflächen sollen also zahlreiche Ätzgruben und -Kanäle aufweisen, die sehr uneinheitlich geformt sind und möglichst Unterschneidungen aufweisen, damit eindringendes Bindungsmaterial eine ideale Verankerungsmöglichkeit findet zum Zwecke einer verbesserten Haftung der Diamantkörner in der Bindung.

Gemäß Erfindung ist zur Lösung dieser Aufgabe vorgesehen, daß die Diamantkörner zum Vergrößern ihrer Oberfläche um mindestens das Zweifache ihrer natürlichen Oberflächengröße durch Herausarbeitung von Poren in Metallpulver mit einer Teilchengröße von weniger als 20 µm eingebettet bei einer Temperatur oberhalb von 700°C einem Strom von Wasserstoff oder einem wasserstoffhaltigen Gas ausgesetzt werden.

Für die Kinetik dieses Verfahrens läßt sich noch keine abschließende eindeutige Erklärung geben. Aus zahlreichen Varianten bei der Durchführung des Verfahrens ergibt sich aber die Vorstellung, daß der Diamantkohlenstoff zunächst in die Metallteilchen diffundiert, die an der Diamantoberfläche anliegen. Das Metall aktiviert andererseits den Wasserstoff, so daß dieser sich mit dem im Metall gelösten Kohlenstoff zu Methan CH₄ verbindet und dieses Gas fortspült. Dadurch bleiben die an der Reaktion beteiligten Metallpartikel aufnahmefähig für weiteren Kohlenstoff, der an der Berührungsstelle vom Diamant zum Metall diffundiert. Es kommt also nicht zu einer Kohlenstoffsättigung in den Metallteilchen. So fressen sich die Metallteilchen punktuell in die Diamantoberfläche hinein und verursachen die vorteilhafte Topographie.

Aus der FR - A - 24 61 031 ist ein Verfahren zum Bearbeiten von Diamanten bekannt, bei dem die Oberfläche einzelner Diamanten in Berührung mit einem Metallformstück gebracht wird, bei einer Temperatur oberhalb von 700°C und einem Strom von Wasserstoff ausgesetzt wird. Dieses bekannte Verfahren dient dazu, auf einer Seite eines Diamanten ein örtlich begrenztes Muster aufzutragen, also nicht gleichmäßig über den gesamten Umfang verteilte Vertiefungen hervorzurufen. Dafür sieht das bekannte Verfahren das Anlegen einer Schablone vor, deren Anlagefläche begrenzt ist und von der Größe des einzelnen Diamanten abhängig ist. Bei Anwendung einer Schablone liegt somit nicht eine Einbettung im Sinne der Erfindung vor und es kann auch beim Auftragen einer Vielzahl von Körnern auf einer Schablone für ihre gleichzeitige Bearbeitung nur eine örtlich begrenzte Rauhigkeit auf einer Seite der einzelnen Diamantkörner hervorgerufen werden.

Die erfindungsgemäß vorbehandelten Diamantkörner lassen sich besonders vorteilhaft von galvanisch abgeschiedenen Metallen binden. Die Lebensdauer der in solcher Weise hergestellten Diamantwerkzeuge konnte um über 100% gesteigert werden.

Auch Metalle, die im sogenannten Coating-Verfahren auf Diamantkörner aufgebracht werden, wie z.B. phophorhaltiges Nickel oder phosphorhaltiges Cobalt oder Kupfer, lassen sich in solcherart vorbehandelten Diamantoberflächen optimal verankern, so daß das anschließende Einbinden in andere Bindungsmaterialien, wie Metalle oder Kunstharze, eine wesentliche Verbesserung erfährt.

Flüssige Metalle, die benetzungsaktivierende Zusätze enthalten, wie z.B. Kupfer-Silber-Legierungen mit einem Zusatz von Titan, können ebenfalls in die Vertiefungen der so behandelten Diamantoberflächen gut eindringen und auf diese Weise eine hervorragende Haftverbindung zustandebringen.

Weiterhin ist die Anwendung glaskeramischer Bindematerialien möglich, die normalerweise eine bei ihrer Verarbeitung schmelzende Glaskomponente mit niedriger Oberflächenspannung enthalten.

Das erfindungsgemäße Ätzverfahren läßt sich bei Naturdiamanten anwenden. Besonders geeignet ist es jedoch für die Behandlung synthetischer Diamanten.

Naturdiamantkörner weisen in der Regel eine unregelmäßige Oberfläche auf, wenn es sich um Körner handelt, die durch Zerbrechen größerer Diamanten hergestellt sind. Die Bruchflächen solcher Diamantkörner ermöglichen bereits eine Verankerung im Bindungsmaterial. Durch eine zusätzliche Aufrauhung nach der vorliegenden Erfindung, kann die Verankerung und Haftung im Bindungsmaterial noch wesentlich verbessert werden.

Synthetische Diamanten weisen in der Regel Kristallflächen auf, die zum Teil auch planparallel sind. Je gleichmäßiger ein synthetischer Diamant gewachsen ist, um so regelmäßiger ist seine geometrische Form, meist in Gestalt eines Kubookta - eders. Besonders gleichmäßig gewachsene Diamantkristalle haben meist auch einen hohen Reinheitsgrad und eine große Festigkeit. Diese positiven Merkmale können aber nur dann voll genutzt werden, wenn die Kristalle vom Bindungsmaterial fest und ausdauernd gehalten werden. Die ebenen Flächen gut gewachsener Kristalle haben aber eine schlechte Verankerung in der Bindung zur Folge. Daher kann der Nutzwert bei solchen synthetischen Diamantkristallen durch eine hochwertige Aufrauhung nach der vorliegenden Erfindung erheblich gesteigert werden. Das hat sich deutlich bei Abrichtwerkzeugen für Schleifscheiben gezeigt, bei denen die Diamantkristalle in einer galvanisch abgeschiedene Metallbindung aus Nickel eingeschlossen sind. Gleiches gilt für Diamantkristalle, die in eine Metallpulvermatrix eingebettet wurden, die mit einer Diamant-benetzenden, geschmozenen Legierung getränkt wurde. Eine solche Legierung besteht z.B. aus Silber und Kupfer und enthält einen Zusatz von Titan.

Die Durchführung des erfindungsgemäßen Ätzverfahrens ist durch folgende Merkmale gekennzeichnet. Die Diamantkristalle werden in ein feines Metallpulver eingebettet, dessen Teilchengrößen unter 20 µm liegen, vorzugsweise zwischen 5 µm und 0,5 µm. Als Behälter kann ein Glühschiffchen aus Porzellan verwendet werden, aber auch andere Behälterformen sind geeignet, soweit sich die Behälter von Gas durchspülen lassen.

Der Behälter wird in einen Ofen gestellt, der sich von Gas durchspülen läßt, vorzugsweise in einen Rohrofen. Der Ofen wird von Wasserstoff durchspült oder von einem Mischgas, das Wasserstoff enthält. Am besten hat sich reiner Wasserstoff mit einem Reinheitsgrad von mindestens 99% H₂ erwiesen. Als Metallpulver eignen sich Eisen, Cobalt, Nickel oder Mischungen bzw. Legierungen dieser Metalle. Diese spezielle Glühbehandlung ergibt eine vorteilhafte Aufrauhung der Diamantkristalle, wenn die Temperatur mindestens 700°C beträgt. Durch höhere Temperaturen wird die Aufrauhung intensiviert. Temperaturen über 900°C sind aber nachteilig, weil dadurch die innere Festigkeit der Diamantkristalle verringert wird. Für diese Behandlung im Temperaturbereich von 700°C bis 900°C sind meist 30 Minuten ausreichend. Die Reaktionsdauer kann aber weitgehend variiert werden.

Nach der speziellen Glühbehandlung wird das Metallpulver mit Säure aufgelöst, z. B. mit Salpetersäure und Salzsäure. So erhält man die aufgerauhten und gereinigten Diamanten, die dann weiterverarbeitet werden können.

Ein Ausführungsbeispiel der Erfindung ist nachstehend unter Bezugnahme auf eine Zeichnung erläutert. In der Zeichnung zeigen:

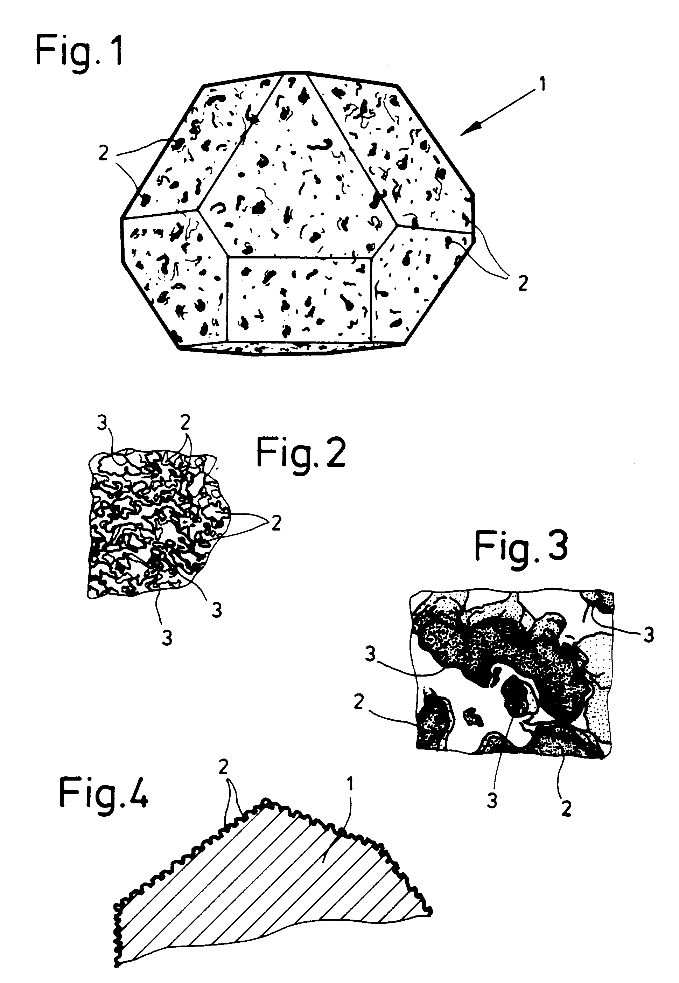

- Fig. 1:: Ein Diamantkorn in 100-facher Vergrößerung.
- Fig. 2:: Einen Oberflächenausschnitt eines aufgerauhten Diamantkornes in 500-facher Vergrößerung.
- Fig. 3:: Einen Teilausschnitt der Oberfläche eines Diamantkornes in 5000-facher Vergrößerung.
- Fig. 4:: Einen Teilquerschnitt durch ein Diamantkorn.

Bei dem in der Zeichnung dargestellten Diamantkorn 1 handelt es sich um einen synthetischen Diamanten in der Form eines Kubooctaeders mit gleichmäßig angeordneten Oberflächen. Diese Oberflächen sind künstlich vergrößert auf ein vielfaches der ursprünglichen natürlichen Oberfläche durch eine Behandlung des Diamantkornes in einem Metallpulver unter einer Temperatur von 850°C in einem Ofen, in dem das Diamantkorn dem Einfluß von Wasserstoff ausgesetzt ist. Durch diese Behandlung ist das Diamantkorn 1 von Poren 2 durchsetzt, die Hinterschneidungen 3 aufweisen, so daß das Bindemittel für das Diamantkorn wurzelartig in dasselbe einzudringen vermag und eine erheblich vergrößerte Haftfläche vorfindet.

## Patentansprüche

1. Verfahren zum Bearbeiten von Diamantkörnern, dadurch gekennzeichnet, daß die Diamantkörner (1) zum Vergrößern ihrer Oberfläche auf mindestens das Zweifache ihrer natürlichen Oberflächengröße durch Herausarbeitung von Poren (2) in Metallpulver mit einer Teilchengröße von weniger als 20 µm eingebettet bei einer Temperatur oberhalb von 700°C einem Strom von Wasserstoff oder einem wasserstoffhaltigen Gas ausgesetzt werden.

2. Verfahren nach Anspruch 1, dadurch gekennzeichnet, daß die Diamantkörner einer Reaktionstemperatur von 700 - 900°C ausgesetzt werden.

3. Verfahren nach Anspruch 1, dadurch gekennzeichnet, daß die Diamantkörner (1) in einem Metallpulver aus Eisen, Cobalt, Nickel oder einer Mischung oder Legierung mit diesen Metallen eingebettet werden.

## Claims

1. Method for processing diamond particles, **characterized in** that the diamond particles (1) are exposed to a hydrogen flow or a hydrogenous gas at a temperature higher than 700° C to increase their surface to at least twice their natural surface extent through breaking-down of pores (2) by being embedded in metal powder with a particle range of less than 20 µm.

2. Method according to claim 1, **characterized in** that the diamond particles are exposed to a reaction temperature of 700 to 900° C.

3. Method according to claim 1, **characterized in** that the diamond particles (1) are embedded in a metal powder made of iron, cobalt, nickel or a mixture or alloy with these metalls.

## Revendications

1. Procédé de traitement de particules de diamant, **caractérisé en ce** que les particules de diamant (1) sont exposées à un courant d'hydrogène ou à un gaz contenant de l'hydrogène à une température supérieure à 700° C pour augmenter leur surface à au moins le double de la grandeur de leur surface naturelle par dégrossissement des pores (2) en étant enrobées dans de la poudre de métal avec une grandeur de particules inférieure à 20 µm,

2. Procédé selon la revendication 1, **caractérisé en ce** que les particules de diamant sont soumises à une température de réaction de 700 à 900° C.

3. Procédé selon la revendication 1, **caractérisé en ce** que les particules de diamant (1) sont enrobées dans une poudre de métal constituée par du fer, du cobalt, du nickel ou un mélange ou alliage avec ces métaux.
